# EUROPEAN PATENT APPLICATION

(11) **EP 4 439 306 A1**
(43) Date of publication of application: **02.10.2024**
(21) Application number: 23213572.3
(22) Date of filing: 01.12.2023
(51) Int. Cl.: G06F 11/34

(54) **SNAPSHOTTING OF PERFORMANCE MONITORING**

(30) Priority: 31.03.2023 US 202318194400
(71) Applicant: INTEL Corporation, Santa Clara, CA 95054 (US)
(72) Inventor: Cohen, Moshe, 30900 Zichron Yaakov Z (IL); Yasin, Ahmad, Haifa (IL)
(74) Representative: Samson & Partner Patentanwälte mbB

(57) **Abstract**

Techniques for snapshotting of performance monitoring are described. In an embodiment, an apparatus includes a plurality of performance monitoring hardware resources, hardware to capture a record of state data related to state of the apparatus in connection with an occurrence of an event, and storage to store a first indicator corresponding to at least a first performance monitoring hardware resource of the plurality of performance monitoring hardware resources and to enable the hardware to include, in the record, performance data from the first performance monitoring hardware resource.

## Description

### BACKGROUND

A processor or execution core in an information processing system may include performance counters for monitoring and logging performance information to be used, for example, for characterizing, debugging, and tuning a micro-architectural processor design, finding and fixing performance bottlenecks in hardware and software, and locating avoidable performance issues. Typically, each performance counter would be sampled by software including an instruction to read a register associated with the counter.

### BRIEF DESCRIPTION OF DRAWINGS

Various examples in accordance with the present disclosure will be described with reference to the drawings, in which:
FIG. 1 illustrates a processor for snapshotting of performance monitoring according to an embodiment.
FIG. 2 illustrates formats of a configuration register and a record for snapshotting of performance monitoring according to an embodiment.
FIG. 3 illustrates a method for snapshotting of performance monitoring according to an embodiment.
FIG. 4 illustrates an example computing system.
FIG. 5 illustrates a block diagram of an example processor and/or System on a Chip (SoC) that may have one or more cores and an integrated memory controller.
FIG. 6(A) is a block diagram illustrating both an example in-order pipeline and an example register renaming, out-of-order issue/execution pipeline according to examples.
FIG. 6(B) is a block diagram illustrating both an example in-order architecture core and an example register renaming, out-of-order issue/execution architecture core to be included in a processor according to examples.
FIG. 7 illustrates examples of execution unit(s) circuitry.
FIG. 8 is a block diagram illustrating the use of a software instruction converter to convert binary instructions in a source instruction set architecture to binary instructions in a target instruction set architecture according to examples.

### DETAILED DESCRIPTION

The present disclosure relates to methods, apparatus, systems, and non-transitory computer-readable storage media for snapshotting of performance monitoring. According to some examples, an apparatus includes a plurality of performance monitoring hardware resources, hardware to capture a record of state data related to state of the apparatus in connection with an occurrence of an event, and storage to store a first indicator corresponding to at least a first performance monitoring hardware resource of the plurality of performance monitoring hardware resources and to enable the hardware to include, in the record, performance data from the first performance monitoring hardware resource.

As mentioned in the background section, a processor or execution core in an information processing system may include performance counters for monitoring and logging performance information. Typically, each performance counter would be sampled by software including an instruction to read a register associated with the counter, possibly in response to an interrupt generated by performance monitoring hardware. This approach may include the addition of one or more interrupts and/or instructions to read performance counters and/or metrics during the execution of software being monitored, possibly contributing to software overhead and inaccuracies in measurements of the software being monitored.

In contrast, embodiments described in this specification may provide for more efficient performance monitoring with less software overhead and less interference with the software being monitored, for example, by using hardware to capture the state of any one or more performance counters and/or metrics into a record that may be read independently from the execution of software being monitored. Furthermore, embodiments may provide for the performance information to be protected by allowing a virtual machine monitor (VMM), hypervisor, or other system software to selectively control which counters and/or metrics will be captured for and/or available to users (e.g., in a multi-tenant environment).

Embodiments may provide less intrusive collection of data from multiple performance counters based on the count from a single counter, for more efficient, complete, and/or accurate performance monitoring. Other desired usages may include capturing information related to performance metric drift (e.g., in top-down microarchitectural analysis), information helpful to explain and/or annotate processor stalls (e.g., as reported by a cycle count of a last branch record), etc.

The preceding discussion and the following description(s) of embodiments, based on performance counters, are provided as examples. Embodiments may include and/or relate to other performance monitoring hardware resources or any other hardware resources that may be treated as a group and/or as individual parts of or subgroups of a group.

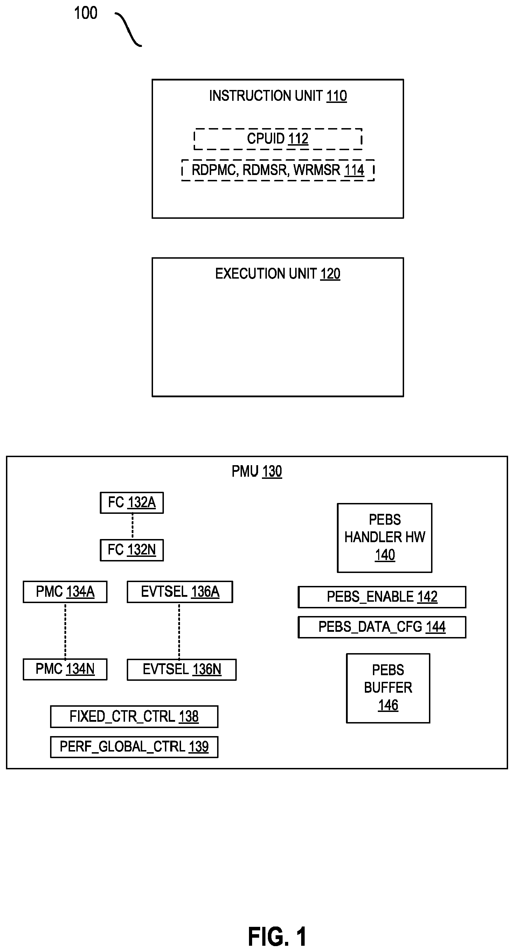

FIG. 1 illustrates a processing device (processor) 100 for snapshotting of performance monitoring according to an embodiment.

Processor 100 may represent all or part of a hardware component including one or more processors, processor cores, or execution cores integrated on a single substrate or packaged within a single package, each of which may include multiple execution threads and/or multiple execution cores, in any combination. Each processor represented as or in processor 100 may be any type of processor, including a general-purpose microprocessor, such as a processor in the Intel^{®} Core^{®} Processor Family or other processor family from Intel^{®} Corporation or another company, a special purpose processor or microcontroller, or any other device or component in an information processing system in which an embodiment may be implemented. Processor 100 may be architected and designed to operate according to any instruction set architecture (ISA), with or without being controlled by microcode. For convenience and/or examples, some features (e.g., instructions, performance counters, registers, exceptions, etc.) may be referred to by a name associated with a specific processor architecture (e.g., Intel^{®} 64 and/or IA32), but embodiments are not limited to those features, names, architectures, etc.

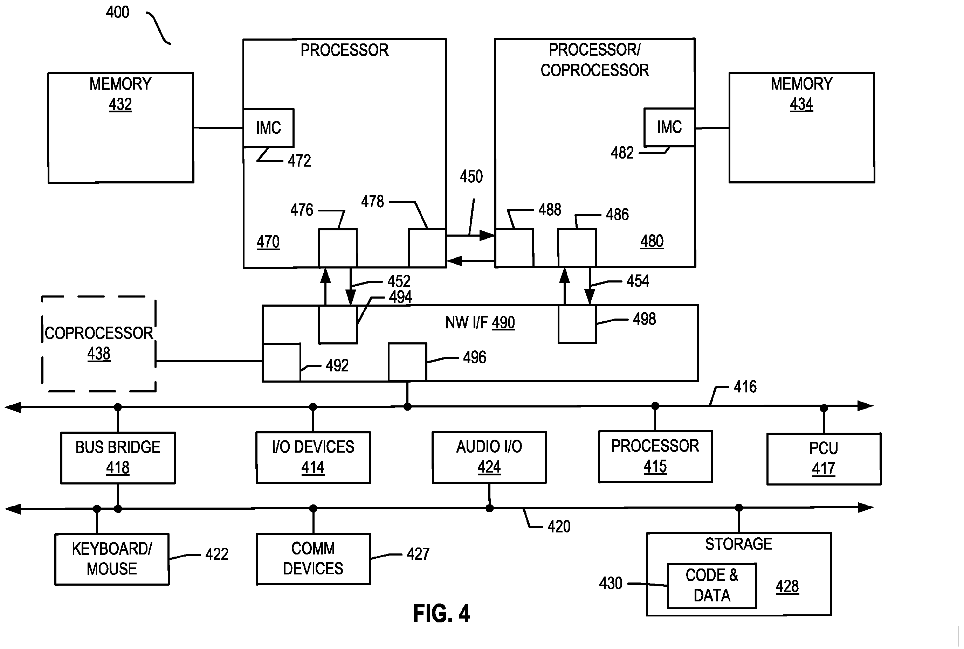

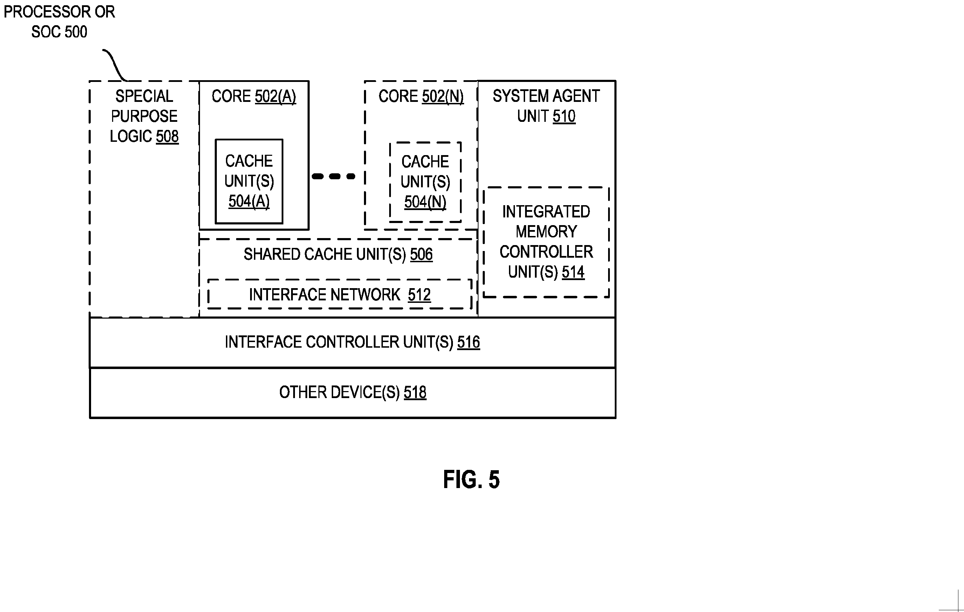

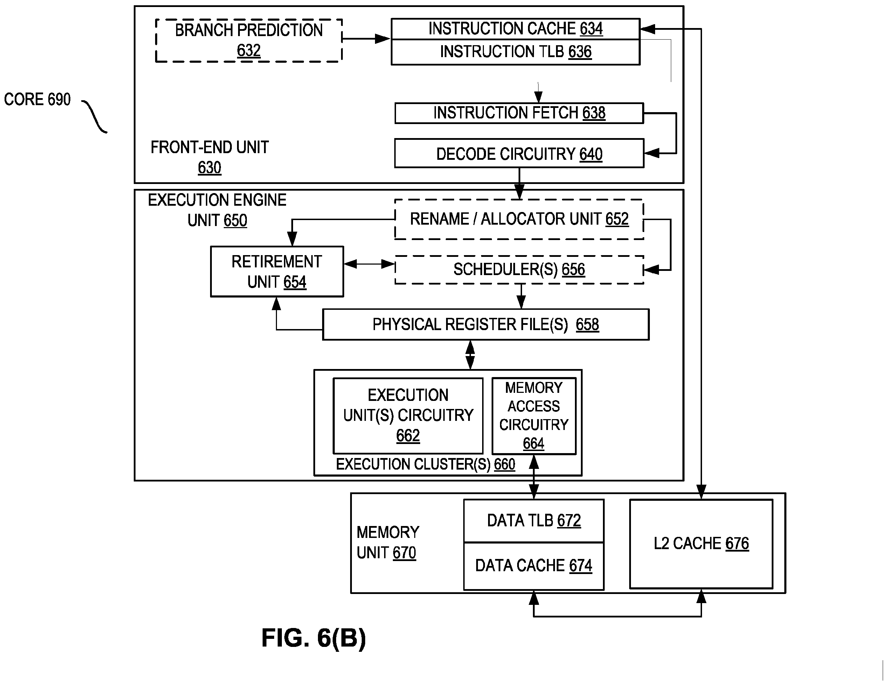

Processor 100 may be implemented in logic gates and/or any other type of circuitry, all, or parts of which may be included in a discrete component and/or integrated into the circuitry of a processing device or any other apparatus in a computer or other information processing system. For example, processor 100 in Figure 1 may correspond to and/or be implemented/included in any of processors 470, 480, or 415 in Figure 4, processor 500 or one of cores 502A to 502N in Figure 5, and/or core 690 in Figure 6B, each as described below.

As shown, processor 100 includes instruction unit 110, execution unit 120, and performance monitoring unit 130. Processor 100 may include any number of each of these elements (e.g., multiple execution units) and/or any other elements not shown in Figure 1.

Instruction unit 110 may correspond to and/or be implemented/included in front-end unit 630 in Figure 6B, as described below, and/or may include any circuitry, logic gates, structures, and/or other hardware, such as an instruction decoder, to fetch, receive, decode, interpret, schedule, and/or handle instructions, such as a processor identification instruction 112 (e.g., CPUID as described below) and one or more read or write instructions 114 (e.g., RDMSR, WRMSR, RDPMC as described below) to be executed by processor 100. In Figure 1, instructions that may be decoded or otherwise handled by instruction unit 110 are represented as blocks with broken line borders because these instructions are not themselves hardware, but rather that instruction unit 110 may include hardware or logic capable of decoding or otherwise handling these instructions.

Any instruction format may be used in embodiments; for example, an instruction may include an opcode and one or more operands, where the opcode may be decoded into one or more micro-instructions or micro-operations for execution by execution unit 120. Operands or other parameters may be associated with an instruction implicitly, directly, indirectly, or according to any other approach.

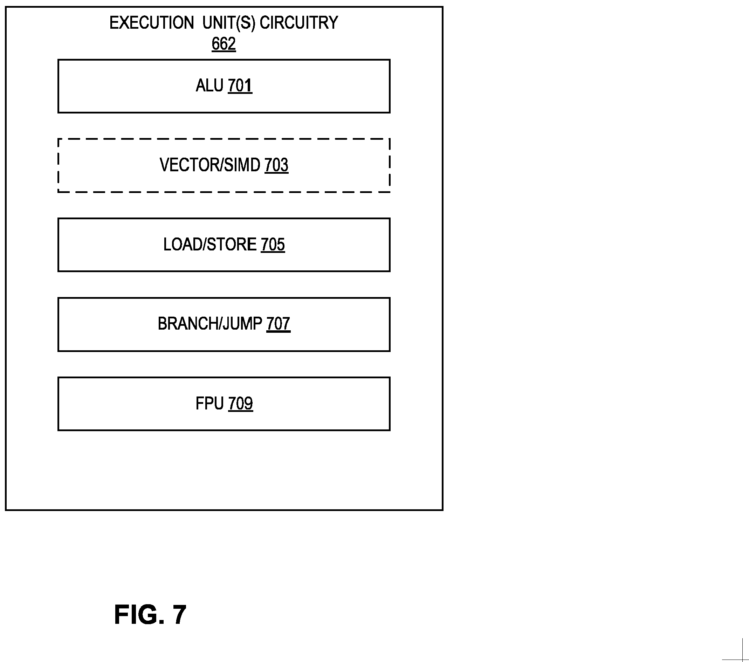

Execution unit 120 may correspond to and/or be implemented/included in any of execution engine 650 in Figure 6B and/or execution unit circuitry 662 in Figures 6B and 7, each as described below, and/or include any circuitry, logic gates, structures, and/or other hardware, such as arithmetic units, logic units, floating point units, shifters, etc., to process data and execute instructions, micro-instructions, and/or micro-operations. Execution unit 120 may represent any one or more physically or logically distinct execution units.

Performance monitoring unit (PMU) 130 may include any circuitry, logic, structures, and/or other hardware to measure, monitor, and/or log performance information related to processor 100, software running on processor 100, and/or a system including processor 100. PMU 130 may include one or more performance monitoring (perfmon) counters 132A to 132N and 134A to 134N to count occurrences of clock cycles, events, events of a particular type, operations, occurrences, actions, conditions, processor parameters, or any other measure of or related to performance (any of which may be referred to for convenience as an event and/or counting an event). For example, a perfmon counter may increment or decrement for each occurrence of a selected event or increment or decrement for each clock cycle during a selected event. The events may include any of a variety of events related to execution of program code on processor 100, such as instructions retired, core clock cycles, reference clock cycles, cache references, cache misses, branch instructions retired, branch mispredictions retired, etc. Therefore, perfmon counters may be used in efforts to tune or profile program code to improve or optimize performance.

In embodiments, perfmon counters may generate a performance record and/or a performance monitoring interrupt (PMI) when the counter overflows, where for convenience, a counter overflow may refer to a counter reaching or exceeding its maximum value (e.g., when incrementing), reaching zero or otherwise underflowing (e.g., when decrementing from a positive starting count), reaching zero (e.g., when decrementing from a positive starting count or incrementing from a negative starting count), otherwise reaching or passing a fixed or programmable target value (e.g., when incrementing or decrementing), etc. For example, a counter may be preset to a modulus value that may cause the counter to overflow after a specific number of events have been counted, which may generate a PMI and/or a performance record, such as a precise event-based sampling (PEBS) record, as described below.

One or more perfmon counters (e.g., 132A to 132N) may be fixed function (e.g., dedicated to counting only a particular event, such as instructions retired, core clock cycles, reference clock cycles) counters, any of which may be referred to as a fixed perfmon counter, fixed counter, FC, FCx where x is a number, FIXED_CTR, FIXED_CTRx where x is a number, etc.). One or more perfmon counters (e.g., 134A to 134N) may be general-purpose (e.g., programmable to count a particular selectable event, such as cache references, cache misses, branch instructions retired, branch mispredictions retired, and reconfigurable to count a different selectable event) counters, any of which may be referred to as a general-purpose perfmon counter, general-purpose counter, programmable perfmon counter, programmable counter, PMC, PMCx where x is a number, etc.). In various embodiments, perfmon counters (or any set or subset of perfmon counters) may be within and/or accessible by a core (core-scoped) or external to a core (e.g., within an uncore or system agent) and/or accessible by more than one core (package-scoped).

Processor 100 also includes a mechanism for perfmon counters to be used. For example, PMU 130 may include and/or be connected to one or more storage locations for accessing (e.g., reading, programming, enabling) counters. In embodiments, such storage locations may be model/machine specific registers (MSRs) and/or may be referred to for convenience as MSRs. Some such MSRs may be specific to a processor or processor architecture (e.g., Intel^{®} 64 and/or IA32) and/or some may be more specifically described below. In various embodiments, MSRs (or any set or subset of MSRs) may be within and/or accessible by a core (core-scoped) or external to a core (e.g., within an uncore or system agent) and/or accessible by more than one core (package-scoped).

In an embodiment including fixed-function perfmon counters (e.g., 132A to 132N), processor 100 may include one or more other MSRs that may be associated with (e.g., used to configure, control, provide status of) one or more FCs, and in an embodiment including general-purpose perfmon counters (e.g., 134A to 134N), processor 100 may include one or more other MSRs that may be associated with (e.g., used to configure, control, provide status of) one or more PMCs. For example, processor 100 may include a fixed perfmon counter control MSR 138 (which may be referred to as FIXED_CTR_CTRL) associated with multiple FCs (e.g., to selectively enable or disable multiple FCs with a single write to the MSR), a global perfmon counter control MSR (which may be referred to as PERF_GLOBAL_CTRL) 139 associated with multiple FCs and/or PMCs (e.g., to selectively enable or disable multiple FCs and/or PMCs with a single write to the MSR), and/or one or more event selection MSRs 136A to 136N (any of which may be referred to as an EVTSEL, PERFEVTSEL, EVTSELx where x is a number, or PERFEVTSELx where x is a number MSR), each of which correspond to one of PMCs 134A to 134N and may be programmed to select (e.g., with bits 7:0) an event to be counted by its corresponding PMC and to enable (e.g., with bit 22, which may be set to 1 to enable and cleared to 0 to disable) its corresponding PMC. Accordingly, processor 100 may include more than one way to enable/disable FCs and/or PMCs individually and/or in groups. Other perfmon MSRs are possible.

In embodiments, the instruction set of processor 100 may include instructions to access (e.g., read and/or write) perfmon counters and/or MSRs associated with perfmon counters, such as an instruction to read a perfmon counter (RDPMC), an instruction to read from an MSR (RDMSR), and an instruction to write to an MSR (WRMSR).

Processor 100 may also include a mechanism to indicate support for and enumeration of performance monitoring capabilities and/or snapshotting of performance monitoring according to an embodiment. For example, in response to an instruction (e.g., in an Intel^{®} x86 processor, a CPUID instruction executed with EAX=0AH), one or more processor registers (e.g., EAX, EBX, ECX, EDX) may return information to indicate whether, to what extent, how, etc. performance monitoring is supported (e.g., number of perfmon counters available, events that may be counted, and/or a snapshotting feature according to embodiments).

Instructions associated and/or used in connection with performance monitoring (e.g., CPUID, RDPMC, RDMSR, and WRMSR) may be intercepted (e.g., the processor may be configured to cause a virtual machine (VM) exit) by a VMM so that performance monitoring may be virtualized (e.g., provide and/or restrict VM access to performance monitoring capabilities).

Embodiments may provide for performance monitoring to include a capability, mechanism, facility, feature, architecture, hardware, etc. for capturing any possible subset of counts from or information (e.g., performance metrics) related to a processor's perfmon counters into a record that may be read independently from the execution of software being monitored (e.g., without the execution of a RDPMC or RDMSR instruction). Embodiments may include a performance monitoring capability, mechanism, facility, feature, architecture, hardware, etc. that captures records including processor state, such as Intel^{®} precise event-based sampling (PEBS), Intel^{®} non-precise event-based sampling (NPEBS), AMD instruction based sampling (IBS), ARM statistical profiling extension (SPE). For convenience, embodiments will be described with reference to PEBS, but embodiments are not limited to PEBS or any other specific feature or architecture.

As used herein, a precise event is an event that is linked to a specific instruction or micro-operation in an instruction trace and occurs when that instruction or micro-operation retires. Such precise events may include, but are not limited to, instructions retired, branch instructions retired, cache references, or cache misses, to name just a few examples. A non-precise event is an event that is either not linked to a specific instruction or micro-operation in an instruction trace or can occur speculatively even when the instruction or micro-operation does not retire. By way of example, a non-precise event may include, but is not limited to, reference clock cycles, core clock cycles, clock cycles when interrupts are masked, etc.

The operation of a processor may include the occurrences of events, as described above, including but not limited to events counted by or otherwise associated with softwarereadable perfmon counters. An event may be a response to a given instruction and/or data stream in the processing device. Events may be associated with architectural metadata including state information of the processor including, but not limited to, an instruction pointer, a time stamp counter, and register state.

In some embodiments, a processor is monitored to track precise and non-precise events. In some embodiments, the processing device tracks precise and/or non-precise events and stores architectural metadata regarding the events in a non-intrusive manner utilizing a mechanism on the processing device without the intervention of an interrupt (e.g., a PMI).

As shown, for example, in PMU 130 in Figure 1, implementation of a PEBS feature or mechanism may include a PEBS handler circuit or hardware (e.g., PEBS handler HW 140) and one or more registers or other storage locations to enable and/or control the PEBS feature, such as a PEBS enable MSR (e.g., PEBS_ENABLE MSR 142) and a PEBS data configuration MSR (PEBS DATA_CFG MSR 144).

In embodiments, PEBS data may be collected, captured, recorded, written, saved, etc. (e.g., as a PEBS record) in response to or in connection with any one or more events, such as but not limited to the overflow of a performance monitoring counter. For example, PEBS_ENABLE MSR 142 may include one or more bits, each corresponding to a performance monitoring counter, that may be set to enable capture (e.g., by PEBS handler HW 140) of a PEBS record in response to the overflow of the corresponding performance monitoring counter. Enabling capture of a PEBS record may also be based on enabling one or more corresponding performance monitoring counters as described above (e.g., using a FIXED_CTR CTRL, PERF_GLOBAL_CTRL, and/or EVTSEL MSR).

In embodiments, the one or more registers to enable and/or control the PEBS feature may include one or more registers (e.g., PEBS_ENABLE MSR 142 and/or PEBS_DATA_CFG MSR 144) including one or more bits to enable and disable capture or snapshotting, into a PEBS record, of performance monitoring information, which may include performance counter counts and/or metrics derived from counts, from one or more performance counters (a performance monitor snapshotting feature. Control of the performance monitor snapshotting feature may be separate, distinct, and/or independent from control of a performance counter/metrics feature and a PEBS feature in one or more ways. For example, enabling or disabling collection of data in connection with the performance monitor snapshotting feature might or might not (depending on implementation) enable or disable collection of data or other operation of a performance counter/metrics feature and a PEBS feature. As a more specific example, the value of an indicator (e.g., a bit in PEBS_ENABLE MSR 142 or PEBS_DATA_CFG MSR 144) controlling collection of data from a particular counter in connection with the performance monitor snapshotting feature might not override or otherwise control of collection of data from and/or use of that particular counter in connection with the performance counter/metrics feature and the PEBS feature (e.g., even if a particular counter is disabled in connection with the performance monitor snapshotting feature, that particular counter may still be enabled and/or used in connection with the performance counter/metrics feature and/or the PEBS feature and its data still read in connection with the performance counter/metrics feature and/or its identification still captured as an applicable counter data in a basic information group of a PEBS record, all as may be further described above and/or below). However, in some embodiments, the converse might or might (depending on implementation) not be true. For example, disabling (or not enabling) a particular counter or event in connection a performance counter feature (e.g., a particular event is not selected to be counted by a general-purpose counter) might prevent collection of data related to that particular counter or event in connection with a performance monitor snapshotting feature.

For example, a single bit location may control a performance monitor snapshotting feature at a global level, such that if the value in the bit location 0 is 1, performance monitor snapshotting information may be collected (subject to finer level controls, if any); and if the value in the bit location is 0, performance monitor snapshotting information is not collected. In addition or instead, bit locations may be provided to enable and/or disable collection of performance snapshotting information at any number of finer levels (e.g., a bit to control collection of performance metrics (PEBS_DATA_CFG.METRICS), a bit to control collection of counts from fixed and general-purpose counters (PEBS_DATA_CFG. COUNTERS), a bit to control collection of counts from fixed counters, a bit to control collection of data from general-purpose counters, a bitfield including bit locations each of which correspond to an individual fixed counter from which to collect counts (PEBS_DATA_CFG.INCLUDED_FIXED_CTRx), a bitfield including bit locations each of which correspond to an individual general purpose counter from which to collect counts (PEBS_DATA_CFG.INCLUDED_PMCx), etc.) as may be further described below.

The data and/or format of a PEBS record may specified, in whole or in part, based on information from a PEBS data configuration register, as described below for example. One or more PEBS records may be stored into storage or memory within or accessible by PMU 130, such as a PEBS buffer (e.g., PEBS buffer 146), and may be read and/or moved from the buffer or other storage or memory by performance monitoring or other software, independently from the execution of the software being monitored.

A PEBS record may include architectural metadata of a state of the processor and/or system upon or in response to occurrence of an event (e.g., the overflow of a performance counter). Such architectural metadata may include, but is not limited to, an Instruction Pointer (IP), Time Stamp Counter (TSC), register state, count and/or state of any number of performance counters, and performance metrics (e.g., based on performance counters). As such, the PEBS record not only allows the location of the precise events in the instruction trace to be accurately profiled, but also provides additional information for use in software optimization, hardware optimization, performance tuning, etc.

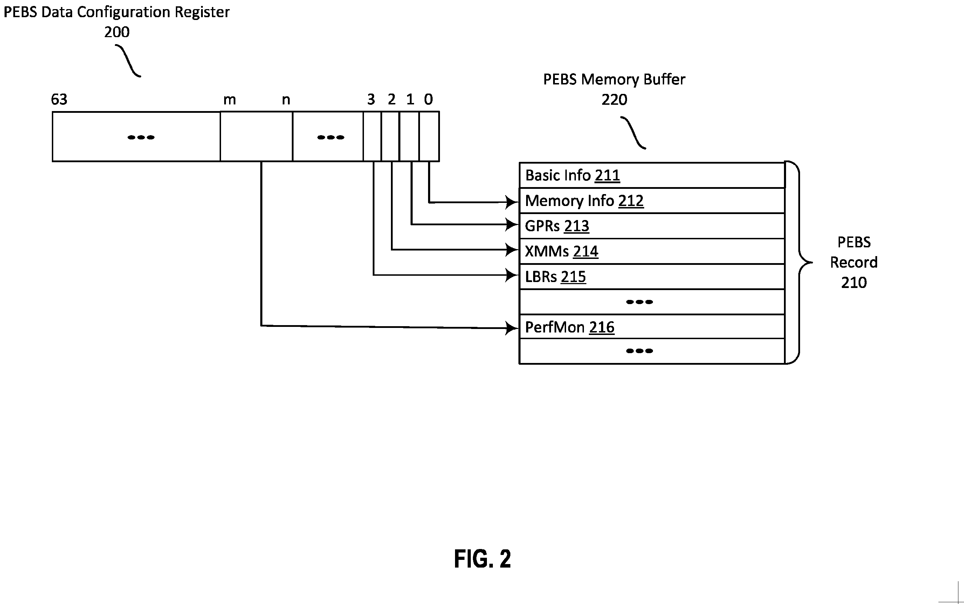

For example, Figure 2 illustrates a format of a PEBS data configuration register (e.g., PEBS data configuration MSR 200, which may correspond to PEBS_DATA_CFG MSR 144 in Figure 1) and a format of a corresponding PEBS record (e.g., PEBS record 210), which may be stored in a PEBS buffer (e.g., PEBS buffer 220, which may correspond to PEBS buffer 146 in Figure 1).

A PEBS record (e.g., PEBS record 210) may include PEBS data, which may refer to processor state, central processor unit (CPU) state, machine state, system state, architectural data and metadata, microarchitectural data and metadata, and any other data or information collectable in response to a precise or non-precise event. A PEBS record may be formatted with data fields organized into groups.

For example, as shown in Figure 2, a PEBS record may include a basic information group (Basic Info 211) that may include a data field for the IP (e.g., of the instruction whose execution, completion, retirement, etc. that resulted in the counter overflow and/or triggered generation of the record), a data field for the TSC (e.g., at the time the record was generated), a data field for the applicable counters (e.g., to identify which counter(s) triggered generation of the record), etc.

For example, as shown in Figure 2, a PEBS record may include a memory information group (Memory Info 212) that may include a data field for the memory access address (e.g., linear address of the source of a load or destination of a store that resulted in the counter overflow and/or triggered generation of the record), one or more data fields for other memory access information, etc.

For example, as shown in Figure 2, a PEBS record may include a general-purpose registers group (GPRs 213) that may include data fields for each or any number of general purpose registers in the processor (e.g., the content of the register immediately after execution, completion, retirement, etc. of the instruction that resulted in the counter overflow and/or triggered generation of the record), etc.

For example, as shown in Figure 2, a PEBS record may include a data registers group (XMMs 214) that may include data fields for each or any number of data registers in the processor (e.g., the content of the register immediately after execution, completion, retirement, etc. of the instruction that resulted in the counter overflow and/or triggered generation of the record), etc.

For example, as shown in Figure 2, a PEBS record may include a last branch record group (LBRs 215) that may include one or more data fields for last branch from addresses (e.g., the addresses from which the last branches were taken before execution, completion, retirement, etc. of the instruction that resulted in the counter overflow and/or triggered generation of the record), one or more data fields for a last branch to addresses (e.g., the addresses to which the last branches were taken before execution, completion, retirement, etc. of the instruction that resulted in the counter overflow and/or triggered generation of the record), one or more data fields for other last branch information, etc.

For example, as shown in Figure 2, a PEBS record may include a performance monitoring group (PerfMon 216) that may include one or more data fields for each or any number of performance monitoring counters in the processor (e.g., for the count immediately after execution, completion, retirement, etc. of the instruction that resulted in the counter overflow and/or triggered generation of the record), one or more data fields for performance metrics (e.g., based on performance counter count(s) immediately after execution, completion, retirement, etc. of the instruction that resulted in the counter overflow and/or triggered generation of the record), etc. The information to be collected for this group is different from and/or in addition to the information collected for the applicable counters field discussed above, in that this group may include information (e.g., a count) for every performance counter or any subset of performance counters, not just the performance counter(s) that overflowed. For example, information may be collected from a performance counter that triggered the PEBS event and/or from a different counter (i.e., a counter that did not trigger the PEBS event).

In various embodiments, PEBS records may include additional PEBS data, omit PEBS data mentioned above, and/or include PEBS data in different groupings, formats, etc. In embodiments, a PEBS facility may provide for adaptive collection of PEBS data. For example, one or more PEBS records in an implementation may include a different set of PEBS data than one or more other PEBS records in the same implementation. Any such set of PEBS data may include some PEBS data collected by default and/or some PEBS data collected according to a selectable configuration (e.g., an OS or other software) of PEBS hardware.

For example, a basic information group (basic info 211) may be collected by default, and other data (such as memory info 212, GPRs 213, XMMs 214, LBRs 215, PerfMon 216, etc.) may be collected when selected for collection. Embodiments may include one or more PEBS data configuration registers that are programmable such that software (e.g., and OS) may specify or select what data is to be collected in a PEBS record and/or the format of a PEBS record.

In the example of Figure 2, PEBS data configuration MSR 200 may be a 64-bit register, in which each of any one or more bit positions may correspond to a particular data group of PEBS record 210, such that the value of each bit controls whether PEBS data for that group is to be collected.

For example, bit locations 0, 1, 2, and 3 may correspond to memory info 212, GPRs 213, XMMs 214, and LBRs 215, respectively, such that if the value of bit location 0 is 1, memory information is collected; if the value of bit location 1 is 1, GPR state is collected; if the value of bit location 2 is 1, XMM state is collected; and if the value of bit location 3 is 1, LBR data is collected; and if the value of bit location 0 is 0, memory information is not collected; if the value of bit location 1 is 0, GPR state is not collected; if the value of bit location 2 is 0, XMM state is not collected; and if the value of bit location 3 is 0, LBR data is not collected.

Similarly, in some implementations, performance counter information may be collected by default, and in other implementations, performance counter information collection may be configurable. Various embodiments may provide various levels, tiers, groupings, etc. of PEBS performance counter information collection configurability.

For example, a PEBS data configuration register (e.g., PEBS data configuration MSR 200) may include one of more bit positions (e.g., bits m:n, where each of bit locations m and n may be any bit location within the register, including different bit locations (i.e., representing a bitfield) and the same bit location (i.e., representing a single bit location)) corresponding to a performance monitoring group (e.g., PerfMon 216) in a PEBS record (e.g., PEBS record 210).

In an embodiment, a single bit location in a PEBS data configuration register may be used to enable PEBS collection of data from a set of performance counters. For example, if the value of the bit location is 1, data is collected from all counters in the set; and if the value of the bit location is 0, data is not collected from any counters in the set. In various embodiments, the set may include all performance counters in the processor, all enabled performance counters, all performance counters allocated to a VMM, all performance counters allocated to a VM or other tenant, all performance counters with counts above a threshold, etc., and the definition of, specification of, and/or assignment of counters to the set may be fixed or configurable (e.g., by software or firmware, or otherwise flexible). In embodiments, data collected from the set may include (and/or may be limited to) performance metrics derived from one or more performance counters.

In an embodiment, a bit and/or bitfield location in a PEBS data configuration register may be used to enable PEBS collection of data from a set of performance counters. Each or any bit location in the bitfield may correspond to a single performance counter (or single performance metric), a subset of performance counters (and/or may include and/or be limited to one or more performance metrics derived from the one or more counters in the subset), or the whole set of performance counters (and/or may include and/or be limited to one or more performance metrics derived from the one or more counters in the set). In various embodiments, the set may include all performance counters in the processor, all enabled performance counters, all performance counters allocated to a VMM, all performance counters allocated to a VM or other tenant, all performance counters with counts above a threshold, etc., and/or a subset may be any group (including one or all counters) within the set (e.g., all performance counters allocated to a VMM, all performance counters allocated to a VM or other tenant, all fixed performance counters, all enabled general purpose performance counters, etc.). In embodiments, data collected from counter(s), subset(s), and or set(s) may include performance metrics derived from one or more performance counters.

For example, if the value of a first bit location in the bitfield is 1, data is collected from the counter(s) corresponding to the first bit location; if the value of the first bit location is 0, data is not collected from the counter(s) corresponding to the first bit location; if the value of a second bit location in the bitfield is 1, data is collected from the counter(s) corresponding to the second bit location; if the value of the second bit location is 0, data is not collected from the counter(s) corresponding to the second bit location.

Definition of, specification of, and/or assignment of counters and/or metrics to the set and/or subset(s) may be fixed or configurable (e.g., by software or firmware, or otherwise flexible). Definition, specification, and/or assignment of the correspondence between bit(s) in the PEBS data configuration register and single, subset(s), and/or set(s) of performance counters and/or metrics may be fixed or configurable (e.g., by software or firmware, or otherwise flexible).

Embodiments may provide for a performance monitor snapshotting feature to be controlled by first software (e.g., an OS, a VMM, a hypervisor, other system or privileged software) and protected from second software (e.g., application software, guest software operating on a virtual software, tenant software operating in a container, etc.), for example, such that any one or more counters may be used in connection with a performance counter/metrics feature and/or a PEBS feature, but data from these one or more counters might or might be hidden from or not be made available to the second software in connection with the performance monitor snapshotting feature.

In some embodiments, upon programming of a PEBS data configuration register(s), PEBS handler circuitry (e.g., as described below), when enabled, generates a PEBS record every time a performance counter enabled to trigger PEBS (e.g., based on the configuration of PEBS_ENABLE MSR 142 as described above) overflows. The PEBS record is intended to reflect the state of the processor, including the count of the performance counters, at the time of the overflow.

Various embodiments may include PEBS handler circuitry or hardware to handle PEBS events and NPEBS events, PEBS handler circuitry or hardware to handle only PEBS events, PEBS handler circuitry or hardware to handle only PEBS events and separate NPEBS handler circuitry or hardware to handle only NPEBS events, etc. As such, in this description, PEBS handler circuitry or hardware (e.g., PEBS handler HW 140), PEBS registers (e.g., PEBS ENABLE MSR 142 and PEBS DATA_CFG MSR 144), PEBS records (e.g., PEBS record 210), etc. may be representative of PEBS features, NPEBS features, combined PEBS and NPEBS features, etc.

For example, an PEBS handler circuit and an NPEBS handler circuit may share some circuitry and/or be implemented as a single, combined handler circuit. An NPEBS handler circuit may use the resources of a PEBS handler circuit, differing from the PEBS handler circuit only in name. In an embodiment, when a PEBS enable or event select register is programmed with a non-precise event identifier, a corresponding performance counter may track the programmed non-precise event. In an embodiment, an NPEBS handler circuit may be coupled to a PEBS enable circuit, which is coupled to a performance counter such that when the performance counter overflows, the PEBS enable circuit causes the NPEBS handler circuit to generate an NPEBS record for the non-precise event. Accordingly, the architectural metadata associated with a non-precise event may be captured without requiring a PMI.

In some embodiments, an NPEBS handler circuit controls timing of the generation of an NPEBS record for a non-precise event. In an embodiment, an NPEBS record for a non-precise event may generated immediately upon occurrence of the overflow of the performance counter tracking the non-precise event. In another embodiment, an NPEBS record for a non-precise event may be generated immediately after the occurrence of the overflow of the performance counter tracking the non-precise events (e.g., upon execution, completion, or retirement of the next subsequent instruction in the instruction trace or stream that triggered the performance counter to overflow).

The above technique of avoiding the use of PMI to capture architectural state of the system associated with events has many advantages. One such advantage is that storing architectural state of the event in the memory storage in this manner is not inhibited when interrupts are masked, such as in interrupt handlers, context switches, locking algorithms, and other regions within privileged code (e.g., ring 0). The amount of time in interrupt handling has increased with the switch toward SoC (Silicon on a Chip), which requires interrupts for interactions between the processor (e.g., central processing unit or CPU) and intellectual property (IP) units. Event-based sampling profiles may be inaccurate if taken when interrupts are masked, leading to capture of an incorrect instruction pointer. In embodiments, placing details of an event in the PEBS buffer is not inhibited when interrupts are masked, thus avoiding the drawbacks mentioned above.

Another advantage of utilizing a NPEBS handler circuit for generation of a NPEBS record for non-precise events is faster detection resulting in higher precision. Processor state may be captured to take the instruction pointer (along with additional information on architectural state) with less latency than is required for the interrupt handler to enter upon a PMI. A further advantage is lower overhead on sampling. Interrupts may be responsible for performance perturbation caused by event-based sampling. Thus, reducing the number of interrupts to obtain performance monitoring samples is advantageous.

Some embodiments of the disclosure are compact circuits, and therefore may be implemented as part of a wide range of processing units without incurring significant increase of cost and power consumption. Some embodiments of the disclosure are programmable circuit logics and may be used to track and manage different types of precise and/or non-precise events on the same circuit logic. In embodiments, PEBS and/or NPEBS handler circuits may be extensible to track multiple processing units. In embodiments, PEBS and/or NPEBS handler circuits may be shared by a plurality of applications running on a same processor and managed by an OS, a VMM, or a hypervisor as a shared resource.

In embodiments, PEBS handler circuits, NPEBS handler circuits, PEBS control circuitry or logic, NPEBS circuitry or logic, etc. may provide for reloading or resetting of one or more performance counters in connection with capturing a PEBS record (after recording data from the counter(s), such that data collected in a subsequent PEBS record is accurate (e.g., not cumulative).

In embodiments, existing PEBS handler circuits, NPEBS handler circuits, PEBS control circuitry or logic, NPEBS circuitry or logic, etc. may be reconfigured or modified such that reloading or resetting of performance counters, if any, is performed after instead of before data from the performance counters is captured in a PEBS record.

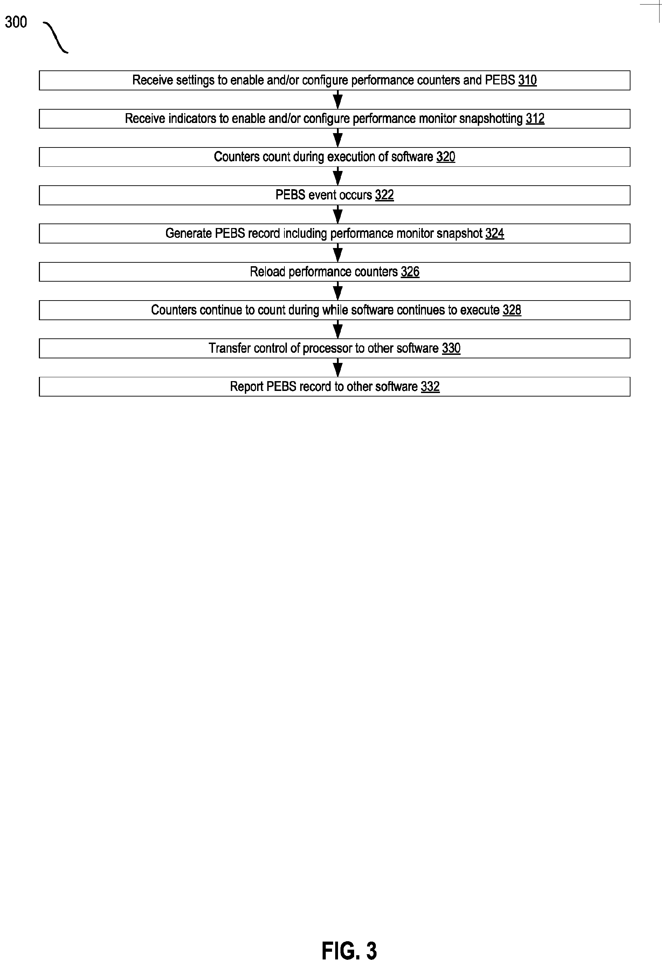

FIG. 3 illustrates a method 300 for snapshotting of performance monitoring according to an embodiment. Method 300 may be performed by and/or in connection with the operation of a processor such as processor 100 in Figure 1; therefore, all or any portion of the preceding description of processor 100 may be applicable to method 300.

In 310, a processor having a set of fixed-function perfmon counters (e.g., FC0 to FC3) and/or a set of general-purpose perfmon counters (e.g., PMC0 to PMC7) may receive and/or store configurable/programmable settings and/or control indicators to enable and/or configure a performance counter/metrics and/or PEBS feature (e.g., by executing and/or responding to WRMSR instruction(s) issued an OS, a VMM, or other system software setting one or more bits in performance counter and/or PEBS control and/or configuration registers).

In 312, the processor may receive and/or store one or more settings and/or control indicators (e.g., bits in PEBS_DATA_CFG MSR 144) to enable (e.g., set to 1) and/or configure aspects, capabilities, etc. of a performance monitor snapshotting feature (e.g., by executing and/or responding to WRMSR instruction(s) issued an OS, a VMM, or other system software setting one or more bits in PEBS control and/or configuration registers). For example, a bit may be set to enable capture of performance metrics data, a bit may be set to enable capture of data from a first subset of performance counters, a bit may be set to enable capture of data from a second subset of performance counters, a bit may be set to enable capture of data from a first individual performance counter, a bit may be set to enable capture of data from a second individual performance counter, etc.

One or more actions, operations, etc. included in 310 and/or 312, and/or 314 may be performed in different order and/or in parallel (e.g., a single write to a configuration register).

In 320, one or more performance monitors/counters operate (e.g., count events) during execution of software (e.g., an application program) by the processor. In 322, a PEBS event occurs. In 324, a PEBS record, including a performance monitor snapshot (e.g., one or more counts and/or metrics counted by and/or derived from at least one or more performance counters that did not trigger the PEBS event), is generated (e.g., by PEBS circuitry/hardware in the processor) and stored (e.g., in a PEBS buffer in the processor) in response to the PEBS event and without interrupting execution of the software. In 326, performance monitors/counters may be reloaded or reset (e.g., by PEBS circuitry/hardware in the processor). In 328, the software may continue to execute on the processor while the performance monitors/counters continue to operate.

The PEBS record may be generated, captured, stored, etc. by hardware during uninterrupted execution of the software. In other words, execution of the software may continue from 320 through 322, 324, 326, and 328 without interruption and/or transfer of control to other software (e.g., an interrupt handler or system software).

In 330, control (e.g., instruction flow) of the processor may be transferred to other software (e.g., an OS, a VMM, or other system software). In 332, the PEBS record and/or data from the PEBS record, including one or more counts and/or metrics counted by and/or derived from one or more performance counters that did not trigger the PEBS event, may be provided (e.g., by executing and/or responding to read and/or move instructions issued by the other software).

In embodiments (e.g., based on an Intel^{®} PEBS architecture), circuitry, hardware, and/or logic may operate as represented by the following pseudocode:

```
 If (MSR PEBS DATA_CFG.COUNTERS == 1 ∥ MSR_PEBS_DATA_CFG_METRICS ==
 1){
       BV_HEADER[127:0] = 0
       BV HEADER [9:0] = MSR PEBS_STATUS.COUNTERS == 1 ?
       MSR_PEBS_DATA_CFG.INCLUDED PMCx : 0
       BV HEADER [67:64] = MSR_PEBS_STATUS. COUNTERS == 1 ?
       MSR_PEBS_DATA_CFG.INCLUDED_FIXED_CTRx : 0
       BV HEADER [97:96] = MSR_PEBS_STATUS.METRICS == 1 ? 0x3 : 0x0
       Store 128-bit BV HEADER into PEBS area
 }
 If (MSR CR PEBS DATA_CFG. COUNTERS == 1){
       for (cntr = 0; cntr < MAX_GP_COUNTERS_SUPPORTED; cntr++) {
              if (MSR_PEBS_DATA_CFG.INCLUDED_PMCx[cntr] == 1)
                     store 64-bit IA32_PMCx into PEBS area
       for (cntr = 0; cntr < MAX_FIXED_COUNTERS_SUPPORTED; cntr++) {
              if (MSR_PEBS_DATA_CFG.INCLUDED_FIXED_CTRx[cntr] == 1)
                     store 64-bit IA32_FIXED_CTRx into PEBS area
 }
```

According to some examples, an apparatus includes a plurality of performance monitoring hardware resources, hardware to capture a record of state data related to state of the apparatus in connection with an occurrence of an event, and storage to store a first indicator corresponding to at least a first performance monitoring hardware resource of the plurality of performance monitoring hardware resources and to enable the hardware to include, in the record, performance data from the first performance monitoring hardware resource.

According to some examples, a method includes receiving, by a processor having a plurality of performance monitoring hardware resources, one or more settings to enable hardware to capture a record of state data related to state of the processor in connection with an occurrence of an event; receiving, by the processor, a first indicator corresponding to at least a first performance monitoring hardware resource of the plurality of performance monitoring hardware resources to enable the hardware to include, in the record, performance data from the first performance monitoring hardware resource; and; and capturing, in connection with the occurrence of the event during execution of first software by the processor, the record, wherein the record includes performance data from the first performance monitoring hardware resource.

According to some examples, a system includes a system memory and a processor. The system memory is to store first software. The processor includes a plurality of performance monitoring hardware resources; hardware to capture a record of state data related to state of the apparatus in connection with an occurrence of an event during uninterrupted execution of the first software; and storage to store a first indicator corresponding to at least a first performance monitoring hardware resource of the plurality of performance monitoring hardware resources and to enable the hardware to include, in the record, performance data from the first performance monitoring hardware resource.

Any such examples may include any or any combination of the following aspects. The first performance monitoring hardware resource may be a first performance counter. The performance data from the first performance monitoring hardware resource may be a count or based on a count from the first performance counter. The plurality of performance monitoring hardware resources may include a second performance monitoring hardware resource to trigger capture of the record. The second performance monitoring hardware resource may be a second performance counter. The second performance counter may be to trigger capture of the record in response to an overflow of the second performance counter. The storage may also be to store a second indicator corresponding to at least the second performance counter and to enable the hardware to include, in the record, performance data from the second performance counter. The performance data from the second performance counter may be a count or based on a count from the second performance counter. The record may be to include an identification of which of the plurality of performance monitoring hardware resources triggered capture of the record. The identification may be captured in the record regardless of the first indicator and the second indicator. The hardware may be to capture the record during the uninterrupted execution of an application program. The apparatus may include a processing device to execute the application program. Execution of the first software may be uninterrupted by capturing the record. The first performance monitoring hardware resource may be a first performance counter and the performance data from the first performance monitoring hardware resource may be a count or is based on a count from the first performance counter. The plurality of performance monitoring hardware resources may include a second performance counter to trigger capture of the record in response to an overflow of the second performance counter. The method may also include receiving, by the processor, a second indicator corresponding to at least the second performance counter to enable the hardware to include, in the record, performance data from the second performance counter. The record may be to include, regardless of the first indicator and the second indicator, an identification of which of the plurality of performance monitoring hardware resources triggered capture of the record. The system memory may also be to store second software to read the record.

According to some examples, an apparatus may include means for performing any function disclosed herein; an apparatus may include a data storage device that stores code that when executed by a hardware processor or controller causes the hardware processor or controller to perform any method or portion of a method disclosed herein; an apparatus, method, system etc. may be as described in the detailed description; a non-transitory machine-readable medium may store instructions that when executed by a machine causes the machine to perform any method or portion of a method disclosed herein. Embodiments may include any details, features, etc. or combinations of details, features, etc. described in this specification.

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

FIG. 4 illustrates an example computing system. Multiprocessor system 400 is an interfaced system and includes a plurality of processors or cores including a first processor 470 and a second processor 480 coupled via an interface 450 such as a point-to-point (P-P) interconnect, a fabric, and/or bus. In some examples, the first processor 470 and the second processor 480 are homogeneous. In some examples, first processor 470 and the second processor 480 are heterogenous. Though the example system 400 is shown to have two processors, the system may have three or more processors, or may be a single processor system. In some examples, the computing system is a system on a chip (SoC).

Processors 470 and 480 are shown including integrated memory controller (IMC) circuitry 472 and 482, respectively. Processor 470 also includes interface circuits 476 and 478; similarly, second processor 480 includes interface circuits 486 and 488. Processors 470, 480 may exchange information via the interface 450 using interface circuits 478, 488. IMCs 472 and 482 couple the processors 470, 480 to respective memories, namely a memory 432 and a memory 434, which may be portions of main memory locally attached to the respective processors.

Processors 470, 480 may each exchange information with a network interface (NW I/F) 490 via individual interfaces 452, 454 using interface circuits 476, 494, 486, 498. The network interface 490 (e.g., one or more of an interconnect, bus, and/or fabric, and in some examples is a chipset) may optionally exchange information with a coprocessor 438 via an interface circuit 492. In some examples, the coprocessor 438 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 470, 480 or outside of both processors, yet connected with the processors via an interface such as P-P interconnect, such that either or both processors' local cache information may be stored in the shared cache if a processor is placed into a low power mode.

Network interface 490 may be coupled to a first interface 416 via interface circuit 496. In some examples, first interface 416 may be an interface such as a Peripheral Component Interconnect (PCI) interconnect, a PCI Express interconnect or another I/O interconnect. In some examples, first interface 416 is coupled to a power control unit (PCU) 417, which may include circuitry, software, and/or firmware to perform power management operations with regard to the processors 470, 480 and/or co-processor 438. PCU 417 provides control information to a voltage regulator (not shown) to cause the voltage regulator to generate the appropriate regulated voltage. PCU 417 also provides control information to control the operating voltage generated. In various examples, PCU 417 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 417 is illustrated as being present as logic separate from the processor 470 and/or processor 480. In other cases, PCU 417 may execute on a given one or more of cores (not shown) of processor 470 or 480. In some cases, PCU 417 may be implemented as a microcontroller (dedicated or general-purpose) or other control logic configured to execute its own dedicated power management code, sometimes referred to as P-code. In yet other examples, power management operations to be performed by PCU 417 may be implemented externally to a processor, such as by way of a separate power management integrated circuit (PMIC) or another component external to the processor. In yet other examples, power management operations to be performed by PCU 417 may be implemented within BIOS or other system software.

Various I/O devices 414 may be coupled to first interface 416, along with a bus bridge 418 which couples first interface 416 to a second interface 420. In some examples, one or more additional processor(s) 415, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 416. In some examples, second interface 420 may be a low pin count (LPC) interface. Various devices may be coupled to second interface 420 including, for example, a keyboard and/or mouse 422, communication devices 427 and storage circuitry 428. Storage circuitry 428 may be one or more non-transitory machine-readable storage media as described below, such as a disk drive or other mass storage device which may include instructions/code and data 430. Further, an audio I/O 424 may be coupled to second interface 420. Note that other architectures than the point-to-point architecture described above are possible. For example, instead of the point-to-point architecture, a system such as multiprocessor system 400 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

FIG. 5 illustrates a block diagram of an example processor and/or SoC 500 that may have one or more cores and an integrated memory controller. The solid lined boxes illustrate a processor 500 with a single core 502(A), system agent unit circuitry 510, and a set of one or more interface controller unit(s) circuitry 516, while the optional addition of the dashed lined boxes illustrates an alternative processor 500 with multiple cores 502(A)-(N), a set of one or more integrated memory controller unit(s) circuitry 514 in the system agent unit circuitry 510, and special purpose logic 508, as well as a set of one or more interface controller units circuitry 516. Note that the processor 500 may be one of the processors 470 or 480, or coprocessor 438 or 415 of FIG. 4.

Thus, different implementations of the processor 500 may include: 1) a CPU with the special purpose logic 508 being integrated graphics and/or scientific (throughput) logic (which may include one or more cores, not shown), and the cores 502(A)-(N) being one or more general purpose cores (e.g., general purpose in-order cores, general purpose out-of-order cores, or a combination of the two); 2) a coprocessor with the cores 502(A)-(N) being a large number of special purpose cores intended primarily for graphics and/or scientific (throughput); and 3) a coprocessor with the cores 502(A)-(N) being a large number of general purpose in-order cores. Thus, the processor 500 may be a general-purpose processor, coprocessor, or special-purpose processor, such as, for example, a network or communication processor, compression engine, graphics processor, GPGPU (general purpose graphics processing unit), a high throughput many integrated cores (MIC) coprocessor (including 30 or more cores), embedded processor, or the like. The processor may be implemented on one or more chips. The processor 500 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 504(A)-(N) within the cores 502(A)-(N), a set of one or more shared cache unit(s) circuitry 506, and external memory (not shown) coupled to the set of integrated memory controller unit(s) circuitry 514. The set of one or more shared cache unit(s) circuitry 506 may include one or more mid-level caches, such as level 2 (L2), level 3 (L3), level 4 (L4), or other levels of cache, such as a last level cache (LLC), and/or combinations thereof. While in some examples interface network circuitry 512 (e.g., a ring interconnect) interfaces the special purpose logic 508 (e.g., integrated graphics logic), the set of shared cache unit(s) circuitry 506, and the system agent unit circuitry 510, alternative examples use any number of well-known techniques for interfacing such units. In some examples, coherency is maintained between one or more of the shared cache unit(s) circuitry 506 and cores 502(A)-(N). In some examples, interface controller units circuitry 516 couple the cores 502 to one or more other devices 518 such as one or more I/O devices, storage, one or more communication devices (e.g., wireless networking, wired networking, etc.), etc.

In some examples, one or more of the cores 502(A)-(N) are capable of multithreading. The system agent unit circuitry 510 includes those components coordinating and operating cores 502(A)-(N). The system agent unit circuitry 510 may include, for example, power control unit (PCU) circuitry and/or display unit circuitry (not shown). The PCU may be or may include logic and components needed for regulating the power state of the cores 502(A)-(N) and/or the special purpose logic 508 (e.g., integrated graphics logic). The display unit circuitry is for driving one or more externally connected displays.

The cores 502(A)-(N) may be homogenous in terms of instruction set architecture (ISA). Alternatively, the cores 502(A)-(N) may be heterogeneous in terms of ISA; that is, a subset of the cores 502(A)-(N) may be capable of executing an ISA, while other cores may be capable of executing only a subset of that ISA or another ISA.

### Example Core Architectures - In-order and out-of-order core block diagram.

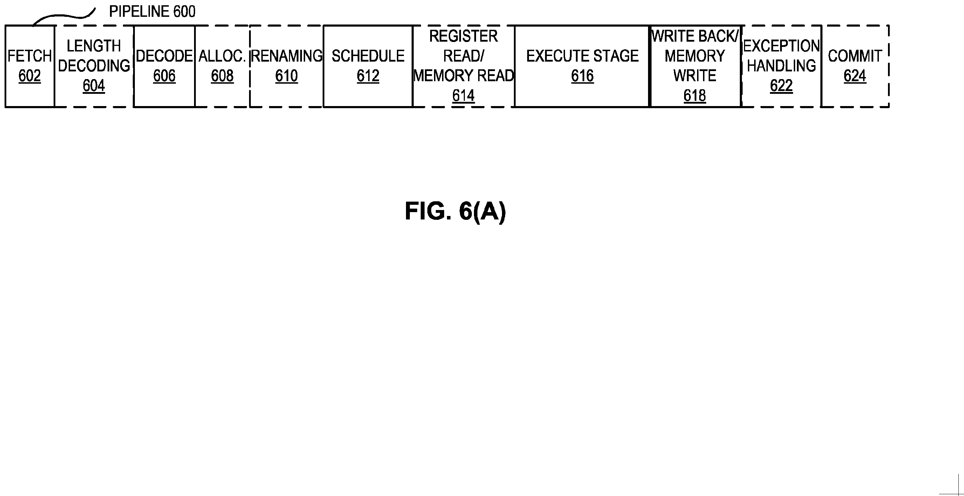

FIG. 6(A) is a block diagram illustrating both an example in-order pipeline and an example register renaming, out-of-order issue/execution pipeline according to examples. FIG. 6(B) is a block diagram illustrating both an example in-order architecture core and an example register renaming, out-of-order issue/execution architecture core to be included in a processor according to examples. The solid lined boxes in FIGS. 6(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 6(A), a processor pipeline 600 includes a fetch stage 602, an optional length decoding stage 604, a decode stage 606, an optional allocation (Alloc) stage 608, an optional renaming stage 610, a schedule (also known as a dispatch or issue) stage 612, an optional register read/memory read stage 614, an execute stage 616, a write back/memory write stage 618, an optional exception handling stage 622, and an optional commit stage 624. One or more operations can be performed in each of these processor pipeline stages. For example, during the fetch stage 602, one or more instructions are fetched from instruction memory, and during the decode stage 606, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 606 and the register read/memory read stage 614 may be combined into one pipeline stage. In one example, during the execute stage 616, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 6(B) may implement the pipeline 600 as follows: 1) the instruction fetch circuitry 638 performs the fetch and length decoding stages 602 and 604; 2) the decode circuitry 640 performs the decode stage 606; 3) the rename/allocator unit circuitry 652 performs the allocation stage 608 and renaming stage 610; 4) the scheduler(s) circuitry 656 performs the schedule stage 612; 5) the physical register file(s) circuitry 658 and the memory unit circuitry 670 perform the register read/memory read stage 614; the execution cluster(s) 660 perform the execute stage 616; 6) the memory unit circuitry 670 and the physical register file(s) circuitry 658 perform the write back/memory write stage 618; 7) various circuitry may be involved in the exception handling stage 622; and 8) the retirement unit circuitry 654 and the physical register file(s) circuitry 658 perform the commit stage 624.

FIG. 6(B) shows a processor core 690 including front-end unit circuitry 630 coupled to execution engine unit circuitry 650, and both are coupled to memory unit circuitry 670. The core 690 may be a reduced instruction set architecture computing (RISC) core, a complex instruction set architecture computing (CISC) core, a very long instruction word (VLIW) core, or a hybrid or alternative core type. As yet another option, the core 690 may be a special-purpose core, such as, for example, a network or communication core, compression engine, coprocessor core, general purpose computing graphics processing unit (GPGPU) core, graphics core, or the like.

The front-end unit circuitry 630 may include branch prediction circuitry 632 coupled to instruction cache circuitry 634, which is coupled to an instruction translation lookaside buffer (TLB) 636, which is coupled to instruction fetch circuitry 638, which is coupled to decode circuitry 640. In one example, the instruction cache circuitry 634 is included in the memory unit circuitry 670 rather than the front-end circuitry 630. The decode circuitry 640 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 640 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 640 may be implemented using various different mechanisms. Examples of suitable mechanisms include, but are not limited to, look-up tables, hardware implementations, programmable logic arrays (PLAs), microcode read only memories (ROMs), etc. In one example, the core 690 includes a microcode ROM (not shown) or other medium that stores microcode for certain macroinstructions (e.g., in decode circuitry 640 or otherwise within the front-end circuitry 630). In one example, the decode circuitry 640 includes a micro-operation (micro-op) or operation cache (not shown) to hold/cache decoded operations, micro-tags, or micro-operations generated during the decode or other stages of the processor pipeline 600. The decode circuitry 640 may be coupled to rename/allocator unit circuitry 652 in the execution engine circuitry 650.

The execution engine circuitry 650 includes the rename/allocator unit circuitry 652 coupled to retirement unit circuitry 654 and a set of one or more scheduler(s) circuitry 656. The scheduler(s) circuitry 656 represents any number of different schedulers, including reservations stations, central instruction window, etc. In some examples, the scheduler(s) circuitry 656 can include arithmetic logic unit (ALU) scheduler/scheduling circuitry, ALU queues, address generation unit (AGU) scheduler/scheduling circuitry, AGU queues, etc. The scheduler(s) circuitry 656 is coupled to the physical register file(s) circuitry 658. Each of the physical register file(s) circuitry 658 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 658 includes vector registers unit circuitry, writemask registers unit circuitry, and scalar register unit circuitry. These register units may provide architectural vector registers, vector mask registers, general-purpose registers, etc. The physical register file(s) circuitry 658 is coupled to the retirement unit circuitry 654 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 654 and the physical register file(s) circuitry 658 are coupled to the execution cluster(s) 660. The execution cluster(s) 660 includes a set of one or more execution unit(s) circuitry 662 and a set of one or more memory access circuitry 664. The execution unit(s) circuitry 662 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 656, physical register file(s) circuitry 658, and execution cluster(s) 660 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 664). It should also be understood that where separate pipelines are used, one or more of these pipelines may be out-of-order issue/execution and the rest in-order.

In some examples, the execution engine unit circuitry 650 may perform load store unit (LSU) address/data pipelining to an Advanced Microcontroller Bus (AMB) interface (not shown), and address phase and writeback, data phase load, store, and branches.

The set of memory access circuitry 664 is coupled to the memory unit circuitry 670, which includes data TLB circuitry 672 coupled to data cache circuitry 674 coupled to level 2 (L2) cache circuitry 676. In one example, the memory access circuitry 664 may include load unit circuitry, store address unit circuitry, and store data unit circuitry, each of which is coupled to the data TLB circuitry 672 in the memory unit circuitry 670. The instruction cache circuitry 634 is further coupled to the level 2 (L2) cache circuitry 676 in the memory unit circuitry 670. In one example, the instruction cache 634 and the data cache 674 are combined into a single instruction and data cache (not shown) in L2 cache circuitry 676, level 3 (L3) cache circuitry (not shown), and/or main memory. The L2 cache circuitry 676 is coupled to one or more other levels of cache and eventually to a main memory.

The core 690 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 690 includes logic to support a packed data instruction set architecture extension (e.g., AVX1, AVX2), thereby allowing the operations used by many multimedia applications to be performed using packed data.

### Example Execution Unit(s) Circuitry.

FIG. 7 illustrates examples of execution unit(s) circuitry, such as execution unit(s) circuitry 662 of FIG. 6(B). As illustrated, execution unit(s) circuity 662 may include one or more ALU circuits 701, optional vector/single instruction multiple data (SIMD) circuits 703, load/store circuits 705, branch/jump circuits 707, and/or Floating-point unit (FPU) circuits 709. ALU circuits 701 perform integer arithmetic and/or Boolean operations. Vector/SIMD circuits 703 perform vector/SIMD operations on packed data (such as SIMD/vector registers). Load/store circuits 705 execute load and store instructions to load data from memory into registers or store from registers to memory. Load/store circuits 705 may also generate addresses. Branch/jump circuits 707 cause a branch or jump to a memory address depending on the instruction. FPU circuits 709 perform floating-point arithmetic. The width of the execution unit(s) circuitry 662 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or objectoriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

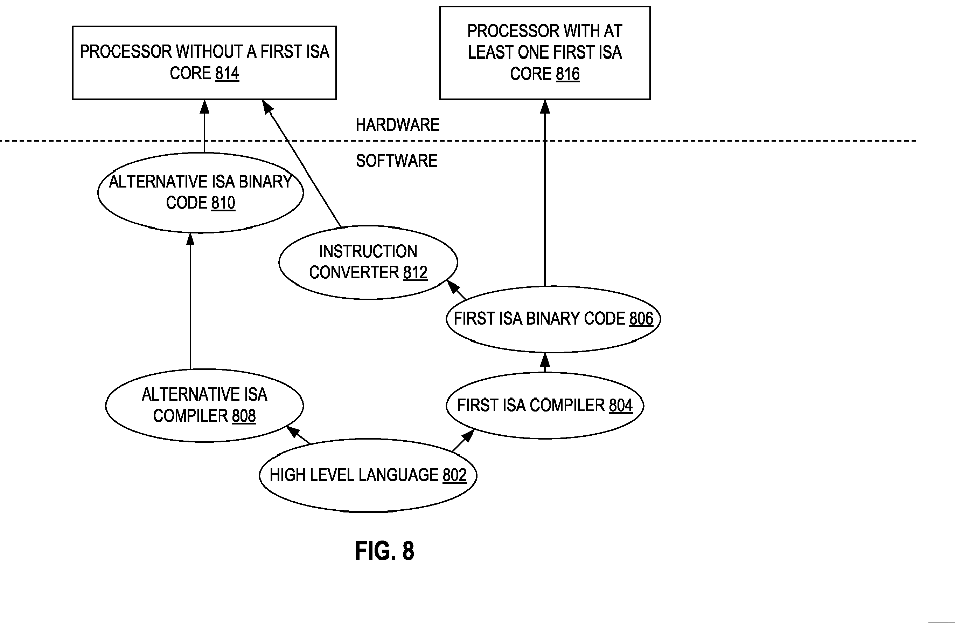

FIG. 8 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 8 shows a program in a high-level language 802 may be compiled using a first ISA compiler 804 to generate first ISA binary code 806 that may be natively executed by a processor with at least one first ISA core 816. The processor with at least one first ISA core 816 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 804 represents a compiler that is operable to generate first ISA binary code 806 (e.g., object code) that can, with or without additional linkage processing, be executed on the processor with at least one first ISA core 816. Similarly, FIG. 8 shows the program in the high-level language 802 may be compiled using an alternative ISA compiler 808 to generate alternative ISA binary code 810 that may be natively executed by a processor without a first ISA core 814. The instruction converter 812 is used to convert the first ISA binary code 806 into code that may be natively executed by the processor without a first ISA core 814. This converted code is not necessarily to be the same as the alternative ISA binary code 810; however, the converted code will accomplish the general operation and be made up of instructions from the alternative ISA. Thus, the instruction converter 812 represents software, firmware, hardware, or a combination thereof that, through emulation, simulation, or any other process, allows a processor or other electronic device that does not have a first ISA processor or core to execute the first ISA binary code 806.

References to "one example," "an example," "one embodiment," "an embodiment," etc., indicate that the example or embodiment described may include a particular feature, structure, or characteristic, but every example or embodiment may not necessarily include the particular feature, structure, or characteristic. Moreover, such phrases are not necessarily referring to the same example or embodiment. Further, when a particular feature, structure, or characteristic is described in connection with an example or embodiment, it is submitted that it is within the knowledge of one skilled in the art to affect such feature, structure, or characteristic in connection with other examples or embodiments whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e., A and B, A and C, B and C, and A, B and C). As used in this specification and the claims and unless otherwise specified, the use of the ordinal adjectives "first," "second," "third," etc. to describe an element merely indicates that a particular instance of an element or different instances of like elements are being referred to and is not intended to imply that the elements so described must be in a particular sequence, either temporally, spatially, in ranking, or in any other manner. Also, as used in descriptions of embodiments, a "/" character between terms may mean that what is described may include or be implemented using, with, and/or according to the first term and/or the second term (and/or any other additional terms).

Also, the terms "bit," "flag," "field," "entry," "indicator," etc., may be used to describe any type or content of a storage location in a register, table, database, or other data structure, whether implemented in hardware or software, but are not meant to limit embodiments to any particular type of storage location or number of bits or other elements within any particular storage location. For example, the term "bit" may be used to refer to a bit position within a register and/or data stored or to be stored in that bit position. The term "clear" may be used to indicate storing or otherwise causing the logical value of zero to be stored in a storage location, and the term "set" may be used to indicate storing or otherwise causing the logical value of one, all ones, or some other specified value to be stored in a storage location; however, these terms are not meant to limit embodiments to any particular logical convention, as any logical convention may be used within embodiments.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
a plurality of performance monitoring hardware resources;
hardware to capture a record of state data related to state of the apparatus in connection with an occurrence of an event; and
storage to store a first indicator corresponding to at least a first performance monitoring hardware resource of the plurality of performance monitoring hardware resources and to enable the hardware to include, in the record, performance data from the first performance monitoring hardware resource.

2. The apparatus of claim 1, wherein the first performance monitoring hardware resource is a first performance counter.

3. The apparatus of claim 2, wherein the performance data from the first performance monitoring hardware resource is a count from the first performance counter or is based on the count from the first performance counter.

4. The apparatus of claim 3, wherein the plurality of performance monitoring hardware resources includes a second performance monitoring hardware resource to trigger capture of the record.

5. The apparatus of claim 4, wherein the second performance monitoring hardware resource is a second performance counter.

6. The apparatus of claim 5, wherein the second performance counter is to trigger capture of the record in response to an overflow of the second performance counter.

7. The apparatus of claim 5 or 6, wherein the storage is also to store a second indicator corresponding to at least the second performance counter and to enable the hardware to include, in the record, performance data from the second performance counter.

8. The apparatus of claim 7, wherein the performance data from the second performance counter is a count from the second performance counter or is based on the count from the second performance counter.

9. The apparatus of any of claims 1-8, wherein the record is to include an identification of which of the plurality of performance monitoring hardware resources triggered capture of the record.

10. The apparatus of claim 9, wherein the identification is captured in the record regardless of the first indicator and the second indicator.

11. The apparatus of any of claims 1-10, wherein the hardware is to capture the record during uninterrupted execution of an application program.

12. A method comprising:
receiving, by a processor having a plurality of performance monitoring hardware resources, one or more settings to enable hardware to capture a record of state data related to state of the processor in connection with an occurrence of an event;
receiving, by the processor, a first indicator corresponding to at least a first performance monitoring hardware resource of the plurality of performance monitoring hardware resources to enable the hardware to include, in the record, performance data from the first performance monitoring hardware resource; and
capturing, in connection with the occurrence of the event during execution of first software by the processor, the record, wherein the record includes performance data from the first performance monitoring hardware resource.

13. The method of claim 12, wherein execution of the first software is uninterrupted by capturing the record.

14. A system comprising:
a system memory to store first software; and
a processor including:
a plurality of performance monitoring hardware resources;
hardware to capture a record of state data related to state of the processor in connection with an occurrence of an event during uninterrupted execution of the first software; and
storage to store a first indicator corresponding to at least a first performance monitoring hardware resource of the plurality of performance monitoring hardware resources and to enable the hardware to include, in the record, performance data from the first performance monitoring hardware resource.

15. The system of claim 14, wherein the system memory is also to store second software to read the record.
